**Europäisches Patentamt**

**European Patent Office**

**Office européen des brevets**

(19)

(11) Veröffentlichungsnummer: **0 040 735**
**A2**

(12) **EUROPÄISCHE PATENTANMELDUNG**

(21) Anmeldenummer: **81103527.8**

(22) Anmeldetag: **08.05.81**

(51) Int. Cl.³: **H 01 S 3/02**

(30) Priorität: **23.05.80 DE 3019915**

(43) Veröffentlichungstag der Anmeldung: **02.12.81**
**Patentblatt 81/48**

(84) Benannte Vertragsstaaten: **AT BE CH DE FR GB IT LI NL SE**

(71) Anmelder: **SIEMENS AKTIENGESELLSCHAFT Berlin und München, Postfach 22 02 61, D-8000 München 22 (DE)**

(72) Erfinder: **Koszytorz, Günther, Am Europakanal 4, D-8520 Erlangen (DE)**

(54) **Gehäuse für eine Lasereinrichtung.**

(57) Die Erfindung betrifft ein Gehäuse für eine Lasereinrichtung, das zylinderförmig ist und aus zwei Halbschalen besteht, die durch ein Scharnier verbunden sind. Jede Halbschale weist eine, von der Aufladefläche ausgehende Aussparung auf, die sich längs der Halbschale erstreckt und deren Sohle als Montagefläche für die Lasereinrichtung dient. Zwischen der Aussparung und der kreisförmigen Aussenfläche befinden sich die Führungskanäle für das Kühlwasser und ein Kabelkanal für elektrische Leitungen. Das Gehäuse ist durch die getrennt in der Gehäusewandung geführten Versorgungskanäle raumsparend und wartungsfreundlich.

SIEMENS AKTIENGESELLSCHAFT

Berlin und München

0040735

Unsere Zeichen

VPA **80** P 3 0 7 4 **E**

## Gehäuse für eine Lasereinrichtung

Die Erfindung betrifft ein Gehäuse für eine Lasereinrichtung, das Zuläufe und Abläufe für ein Kühlmittel aufweist und das mit Leitungen für die elektrische Versorgung versehen ist.

Solche Gehäuse sind bei handelsüblichen Lasereinrichtungen vorhanden. Ein Gehäuse umschließt die Lasereinrichtung, die auf einer optischen Bank angebracht ist. Die Zu- und Abläufe für das Kühlmittel und die Leitungen für die elektrische Versorgung verlaufen im Gehäuseraum neben der optischen Bank. Die Wartung und Handhabung der Lasereinrichtung sind durch die frei verlaufenden Zu- und Abläufe für das Kühlmittel und durch die Leitungen für die elektrische Versorgung beeinträchtigt. Das von einem solchen Gehäuse eingenommene Volumen ist durch den Raum für die Versorgungsleitungen für eine Reihe von Anwendungen zu groß. Für eine Lasereinrichtung ist eine gegen Verwindungen und Durchbiegungen steife Montagefläche erforderlich. Das wird in einer herkömmlichen Vorrichtung durch eine hinreichend dicke Platte erreicht.

Der Erfindung liegt die Aufgabe zugrunde, ein Gehäuse der eingangs genannten Art so auszubilden, daß es möglichst wenig Raum einnimmt und eine hohe Wartungsfreundlichkeit und Montagefreundlichkeit aufweist.

Erfindungsgemäß wird diese Aufgabe dadurch gelöst, daß das Gehäuse eine zylindrische Form aufweist, daß das Gehäuse aus zwei Halbschalen besteht, die halbkreisförmige

Fi 2 Mka/22.05.1980

Außenflächen und ebene Auflageflächen besitzen, daß jede der Halbschalen eine von der Auflagefläche ausgehende Aussparung aufweist, daß die Aussparungen der beiden Halbschalen im zusammengesetzten Gehäuse etwa übereinander angeordnet sind, daß die Sohle wenigstens einer Aussparung eine ebene Montagefläche ist, daß mindestens in einer Halbschale zwischen der Aussparung und der halbkreisförmigen Außenfläche mindestens zwei Führungskanäle für das Kühlmittel und mindestens ein Kabelkanal für Leitungen vorhanden ist, und daß die beiden Halbschalen durch eine Verbindungseinrichtung miteinander verbunden sind.

Das Gehäuse weist eine zylindrische und damit raumsparende Form auf. Durch die Integration der Führungskanäle und des Kabelkanals in die Gehäusewandung entsteht ein kleiner Raum für die Lasereinrichtung in Gestalt der übereinander angeordneten Aussparungen. Durch den Wegfall der Versorgungsschläuche werden die Wartungsfreundlichkeit und Übersichtlichkeit der Lasereinrichtung erhöht. Die Sohle einer Aussparung dient als Montagefläche zum Aufbau einer Lasereinrichtung, die gleichzeitig als optische Bank dient. Eine bei herkömmlichen Vorrichtungen schwere Montageplatte und optische Bank erübrigen sich, wodurch das Gewicht der Vorrichtung deutlich verringert wird. Das Gehäuse ist steif genug gegen Verwindungen und Durchbiegungen. Weiterhin ist das Gehäuse durch das hohe Volumen der Gehäusewandung hinreichend widerstandsfähig gegen mechanische Beanspruchungen. Die Ausführung des Gehäuses aus zwei Halbschalen ermöglicht einen einfachen Zusammenbau des Gehäuses und einfachen Zugang zur Lasereinrichtung. Ein zylindrisches Gehäuse bietet den Vorteil, daß es mit handelsüblichen Rohrschellen umschlossen und auf der Montagefläche befestigt werden kann. Weiterhin bietet die zylindrische Ausführung des Gehäuses den Vorteil, daß die gesamte Lasereinrichtung in axialer Richtung verschiebbar ist. Dadurch ist die Handhabung der Lasereinrichtung bei einer Reihe von Anwendungen vereinfacht. Beispielsweise ist ein Laserschreiber mit einem erfindungsgemäßen Gehäuse, dessen Schreibkopf an einer Stirnfläche des Gehäuses konzentrisch zur Zylinderachse angeordnet ist, vielfältiger einsetzbar, da der Schreibkopf ohne besonderen Aufwand auch in enge Räume einschiebbar ist. Durch die Zylinderform des Gehäuses besitzt die Beschriftungsebene stets gleichen Abstand zum Gehäuse. Dadurch ist ein Schwenken des Schreibkopfes um 360° uneingeschränkt möglich.

Vorteilhaft ist es, daß die Verbindungseinrichtung ein an einem Ende der Auflagefläche parallel zur Zylinderachse angebrachtes Scharnier ist, weil dadurch ein schnelles Öffnen und Schließen ohne zusätzliche Werkzeuge möglich ist.

Vorteilhaft ist es, daß die beiden Halbschalen identisch sind, weil dadurch die Herstellung und die Lagerhaltung einfacher und kostengünstig werden.

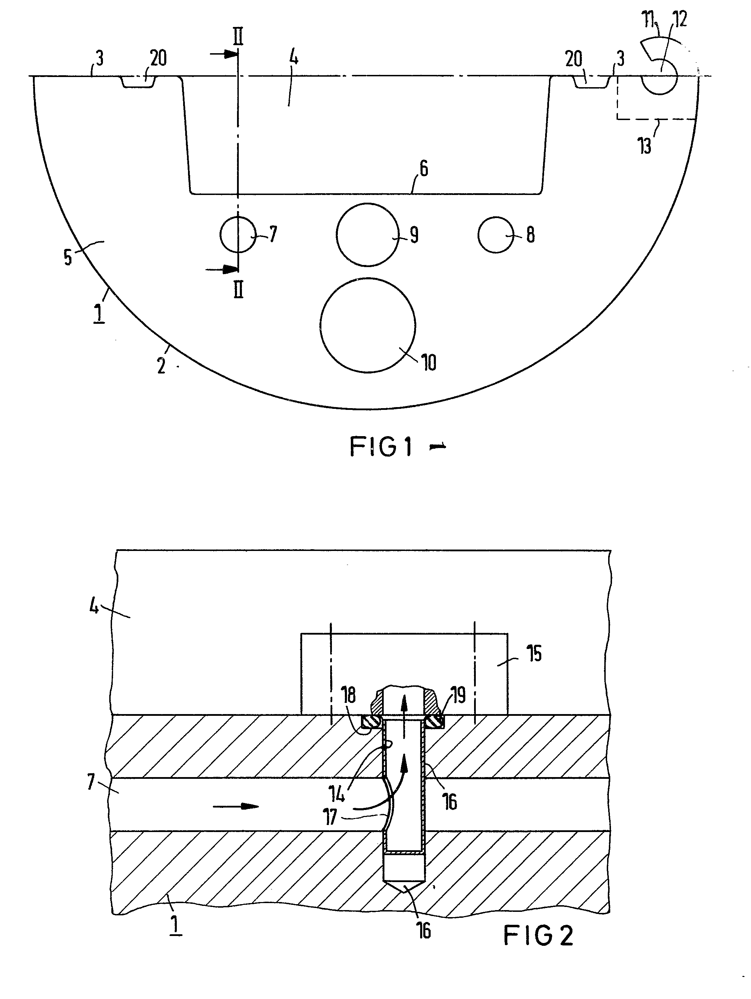

Die Erfindung wird im folgenden beispielhaft anhand der Figuren 1 und 2 dargestellt und beschrieben. Die in beiden Figuren auftretenden gleichen Bauelemente sind mit gleichen Bezugszeichen versehen.

In der Figur 1 ist die Frontansicht einer Halbschale des aus zwei Halbschalen bestehenden erfindungsgemäßen Gehäuses dargestellt. Die Halbschale 1 ist durch eine halbkreisförmige Außenfläche 2, eine ebene Auflagefläche 3 mit einer Aussparung 4 und zwei Stirnflächen 5 begrenzt, von denen die vordere Stirnfläche in der Figur dargestellt ist und die hintere Stirnfläche sich am Ende des Gehäuses deckungsgleich hinter der vorderen Stirnfläche befindet. Die Aussparung 4 geht von der durchgehend gedachten ebenen Auflagefläche 3 aus und besitzt einen etwa rechteckförmigen Querschnitt. Eine Sohle 6 der Aussparung 4 ist eine ebene Fläche, die parallel zur Auflagefläche 3 verläuft. Zwischen der Sohle 6 der Aussparung 4 und der Außenfläche 2 sind als Führungskanäle zwei Zulaufkanäle 7 und 8 und ein Ablaufkanal 9 für das Kühlmittel, beispielsweise Wasser, angebracht. Die Querschnittsfläche des Ablaufkanals 9 ist doppelt so groß wie die Querschnittsfläche jedes einzelnen Zulaufkanals 7 bzw. 8. Weiterhin ist zwischen der Sohle 6 und der Außenfläche 2 ein Kabelkanal 10 für die Leitungen der elektrischen Versorgung vorhanden. Die Querschnittsfläche des Kabelkanals 10 beträgt ein Mehrfaches derjenigen des Ablaufkanals 9. Der Kabelkanal 10 befindet sich zwischen dem Ablaufkanal 9 und der Außenfläche 2. Die Querschnitte der Kanäle 7 bis 10 sind kreisförmig. Die Kanäle 7 bis 10 verlaufen zwischen den beiden Stirnflächen 5 parallel zur Aussparung 4 geradlinig. Die beiden Halbschalen 1 des Gehäuses sind identisch. Die Aussparung 4 der zweiten aufliegenden, nicht in der Figur enthaltenen Halbschale liegt etwa deckungsgleich über der Aussparung 4 der Halbschale 1, so daß beide Aussparungen 4 einen kleinen geschlossenen Raum für die Lasereinrichtung ergeben. Die beiden Halbschalen 1 sind durch ein parallel zur Zylinderachse verlaufendes Scharnier miteinander verbunden. Das Scharnier besteht aus mehreren Ösen 11 und einer alle Ösen 11 durchsetzenden, nicht dargestellten Scharnierachse mit einem Dreh- und Lagerpunkt 12, der in der Ebene der Auflagefläche 3 liegt. An dem rechten Ende der Auflagefläche 3 befindet sich eine Öse 11. Jede Öse 11 umfaßt die Scharnierachse teilweise. Die Ösen 11, die alternierend mit der dargestellten Halbschale 1 und einer nicht dargestellten aufliegenden zweiten Halbschale 1 fest verbunden sind, sind nacheinand angeordnet und grenzen aneinander. Zwischen den Ösen besitzt jede der Halbschalen 1 Aussparungen 13, in die die Ösen 11 der jeweils zweiten Halbschale 1 eingreifen. Die Länge der Ösen 11 und Aussparungen 13 ist etwa gleich. Die Scharnierachse ist in Höhe der vorderen und hinteren Stirnfläche 5 gesichert, beispielsweise durch je einen Sprengring. Auf jedem Teil der durch die Aussparung 4 unterbrochenen Auflagefläche 3 verläuft parallel zur Zylinderachse eine Vertiefung 20 mit etwa trapezförmigem Querschnitt. In jede Vertiefung 20 wird eine Gummidichtung gelegt, die nach Aufeinanderlegen beider Halbschalen 1 den durch die beiden Aussparungen 4 gebildeten Raum für die Lasereinrichtung vor Schmutz und Wasser schützt.

Figur 2 ist im Längsschnitt die Anordnung eines Verbindungsstückes zwischen einem Führungskanal für das Kühlwasser und einem auf der Montagefläche angebrachten, zu kühlenden Bauteil der Lasereinrichtung dargestellt. Ein Verbindungsstück 14 ist ein Nippel, der in eine Bohrung 16 eingepreßt ist. Die Bohrung 16 geht von der Sohle 6 aus, durchsetzt einen Teil der Halbschale 1 und den Zulaufkanal 7 und endet unterhalb des Zulaufkanals 7. Der Nippel 14 weist eine Bohrung 17 auf, durch die der Innenraum des Nippels 14 an den Zulaufkanal 7 angeschlossen ist. Konzentrisch zur Bohrung 16 ist eine Vertiefung 18 in die Montagefläche 6 eingearbeitet. In der Vertiefung 18 liegt eine Rundschnurdichtung 19, die beispielsweise aus Gummi ist. Der zu kühlende Bauteil 15 wird auf der Sohle 6 verschraubt und dadurch auf die Dichtung 19 gepreßt. Im angepreßten Zustand liegt der verschraubte Bauteil 15 auf der Montagefläche 6 auf und nimmt damit eine definierte Lage ein. Dadurch wird eine flüssigkeitsdichte Abdichtung gegenüber der Aussparung 4 bewirkt.

0040735

Das Verbindungsstück 14 leitet das Kühlwasser entsprechend der Anordnung der Pfeile vom Zulaufkanal 7 in den Kühlkreislauf des Bauteils 15. In dem in Figur 2 rechts vom Verbindungsstück 14 liegenden Teil des Zulaufkanals 7 fließt dadurch kein Kühlwasser mehr. Durch ein weiteres, nicht dargestelltes Verbindungsstück wird das Kühlwasser aus dem Kühlkreislauf des Bauteiles 15 entweder wieder in den Zulaufkanal 7 zurückgeführt oder das Kühlwasser wird in den Ablaufkanal 9 abgeleitet. Es sind auch andere Ausführungen eines Verbindungsstücks möglich. Ein Verbindungsstück kann beispielsweise zwei konzentrisch zueinander liegende Bohrungen 17 aufweisen, so daß durch ein solches Verbindungsstück Kühlwasser in einen zu kühlenden Bauteil abgezweigt wird und in dem in Figur 2 rechts vom Verbindungsstück liegenden Teil des Zuflußkanals 7 weiterhin Kühlwasser fließt. Mit solchen Abzweigungen kann beispielsweise eine Parallelschaltung im Kühlsystem ausgeführt werden. Das Kühlwasser wird mit einem Druck von einigen bar in die Zulaufkanäle 7 und 8 eingeleitet.

Auf der Strecke zwischen den beiden Stirnflächen 5 sind zur Versorgung von Bauteilen der Lasereinrichtung mehrere Verbindungsstücke von den Kanälen 7 bis 9 in die Aussparung 4 geführt. In der Lasereinrichtung werden ein Neodym-YAG-Laser, eine Blitzlichtlampe als optische Pumpeinrichtung und ein Q-Switch gekühlt. Das Kühlsystem der Lasereinrichtung besteht aus zwei parallelen Kühlzweigen. Das an einer der Stirnflächen 5 in die Zulaufkanäle 7 und 8 eintretende frische Kühlwasser wird in die beiden Kühlzweige geleitet. Der eine Kühlzweig besteht aus dem Zulaufkanal 7, in den der Kühlkreislauf des Lasers geschaltet ist. Der andere Kühlzweig besteht aus dem Zulaufkanal 8, in den eine Parallelschaltung aus den Kühlkreisläufen der Blitzlichtlampe und des Q-Switch geschaltet ist. Das an den Enden der Zulaufkanäle 7 und 8 an der zweiten Stirnfläche 5 ankommende erwärmte Kühlwasser wird durch Schläuche in den Eingang des Ablaufkanals 9 an der zweiten Stirnfläche 5 eingeleitet. Das erwärmte Kühlwasser tritt nach Durchströmen des Ablaufkanals 9 an der ersten Stirnfläche 5 aus, wo das frische Kühlwasser in die Zulaufkanäle 7 und 8 eingeleitet wird. Das frische Kühlwasser und das erwärmte Kühlwasser strömen damit in entgegengesetzten Richtungen durch die Halbschale 1. Es werden die Kanäle 7 bis 10 von nur einer Halbschale für die Versorgung der Lasereinrichtung verwendet. Für die Zuführung von elektrischen Leitungen aus dem Kabelkanal 10 in die Aussparung 4 werden Bohrungen an dafür geeigneten Stellen durch den Teil der Halbschale zwischen der Sohle 6 und dem Kabelkanal 10 angebracht.

Die beiden Stirnflächen 5 des Gehäuses werden durch je eine Stirnplatte verschlossen, die an der Stirnfläche 5 lösbar befestigt ist. Jede der Stirnplatten enthält Durchführungen für Anschlußstutzen zu den Kanälen 7 bis 10, die sich in derselben geometrischen Anordnung wie auf den Stirnflächen 5 befinden. Die Zu- und Abführung der Kühlflüssigkeit erfolgt durch Schläuche, deren Stutzen in die Kanäle 7 bis 9 einschraubbar sind. An jeder der Stirnplatten können weitere Bauteile lösbar befestigt werden. Durch die Stirnplatten werden die Stirnflächen und damit die Aussparung 4 vor Verschmutzung und mechanischen Beanspruchungen geschützt.

Die Halbschalen 1 werden im Strangpreßverfahren aus Aluminium hergestellt.

0040735

## Patentansprüche

1. Gehäuse für eine Lasereinrichtung, das Zuläufe und Abläufe für ein Kühlmittel aufweist und das mit Leitungen für die elektrische Versorgung versehen ist, d a - d u r c h g e k e n n z e i c h n e t , daß das Gehäuse eine zylindrische Form aufweist, daß das Gehäuse aus zwei Halbschalen (1) besteht, die halbkreisförmige Außenflächen (2) und ebene Auflageflächen (3) besitzen, daß jede der Halbschalen eine von der Auflagefläche (3) ausgehende Aussparung (4) aufweist, daß die Aussparungen (4) der beiden Halbschalen (1) im zusammengesetzten Gehäuse etwa übereinander angeordnet sind, daß die Sohle (6) wenigstens einer Aussparung (4) eine ebene Montagefläche ist, daß mindestens in einer Halbschale (1) zwischen der Aussparung (4) und der halbkreisförmigen Außenfläche (2) mindestens zwei Führungskanäle (7, 9 für das Kühlmittel und mindestens ein Kabelkanal (1( , für Leitungen vorhanden ist, und daß die beiden Halbschalen (1) durch eine Verbindungseinrichtung miteinander verbunden sind.

2. Gehäuse nach Anspruch 1, d a d u r c h g e - k e n n z e i c h n e t , daß die Verbindungseinrichtung ein an einem Ende der Auflagefläche (3) parallel zur Zylinderachse angebrachtes Scharnier (11, 12) ist.

3. Gehäuse nach einem der Ansprüche 1 oder 2, d a - d u r c h g e k e n n z e i c h n e t , daß die beiden Halbschalen (1) identisch sind.

FIG 1

FIG 2